# EUROPEAN PATENT SPECIFICATION

(11) **EP 3 210 907 B1**
(45) Date of publication and mention of the grant of the patent: **17.07.2019**
(21) Application number: 15852938.8
(22) Date of filing: 23.10.2015
(51) Int. Cl.: B65D 75/36, B32B 27/18, B32B 27/32, B65D 65/40, B65D 75/34, B32B 1/02, B32B 27/30, B32B 27/34, B32B 27/36, B32B 15/082, B32B 15/088, B32B 15/09, B32B 15/20, B32B 27/08

(54) **LAMINATE FOR BLISTER PACK, BLISTER PACK USING SAME, BLISTER PACK PACKAGE, AND METHOD FOR MANUFACTURING SAME**
LAMINAT FÜR BLISTERPACKUNG, BLISTERPACKUNG DAMIT, BLISTERPACKVERPACKUNG UND VERFAHREN ZUR HERSTELLUNG DAVON
STRATIFIÉ POUR EMBALLAGE-COQUE, EMBALLAGE-COQUE L'UTILISANT, ET ENSEMBLE EMBALLAGE-COQUE, ET PROCÉDÉ POUR LEUR FABRICATION

(30) Priority: 23.10.2014 JP 2014216560
(43) Date of publication of application: 30.08.2017
(73) Proprietor: Kyodo Printing Co., Ltd., Tokyo 112-8501 (JP)
(72) Inventor: IWASAKI, Nobuhisa, Tokyo 112-8501 (JP); KATO, Midori, Tokyo 112-8501 (JP); OGAWA, Tatsuya, Tokyo 112-8501 (JP); HOSOI, Masayuki, Tokyo 112-8501 (JP)
(74) Representative: Krauns, Christian
(86) International application number: PCT/JP2015/080019
(87) International publication number: WO 2016/063987

(56) References cited:
- EP-A1- 2 612 824
- WO-A1-2012/029899
- WO-A1-2013/140821
- JP-A- 2013 079 086
- JP-A- 2013 169 666

## Description

### TECHNICAL FIELD

The present invention relates to a laminate for a blister package (blister pack), a blister package that uses said laminate, and a blister packaging product (blister pack package). More particularly, the present invention relates to a laminate for a blister package that is free of the occurrence of molding defects even if a pocket is formed at a certain depth in order to package a large pharmaceutical drug, to a blister package that uses said laminate, to a blister packaging product and to a production process of said laminate.

### BACKGROUND ART

While powdered pharmaceutical drugs are enclosed in thin-walled paper pouches or pouches made of plastic film, drugs such as tablets or capsules are enclosed in blister packages referred to as press-though packages (PTP). The drug can be removed by breaking a sheet-like cover by pressing on the drug enclosed in the blister package with a finger.

Pharmaceutical drugs are subject to deterioration of the pharmacologically active ingredient following absorption of moisture. Consequently, a desiccant such as silica gel has conventionally been enclosed within the outer pouch that encloses the blister package. However, the work of placing a desiccant in the outer pouch is labor-intensive, and there is also the risk of the desiccant being accidentally swallowed or consumed. In addition, there was also the problem of a low level of humidity being unable to be maintained within the blister package after opening the outer pouch, thereby resulting in progression of deterioration of the pharmaceutical drug. Moreover, since certain drugs are susceptible to oxidative degradation or emit a peculiar odor, there is also the need to be able to absorb oxygen and odors present within the blister package.

Patent Document 1 discloses a technology whereby long-term stability of a pharmaceutical drug is improved by laminating an adsorbing layer having an adsorbent within a blister package. In this technology, a dome-shaped pocket is first formed in a laminate formed by dry-laminating a substrate film and an absorbing layer having an adsorbing layer. A pharmaceutical drug in the form of a tablet is then placed in the pocket and sealed therein by a cover. According to this technology, the maintaining of a dry state, prevention of oxidation and efficient removal of odors are thought to be possible even if a desiccant and the like is not included in the outer pouch.

In addition, since some pharmaceutical drugs are susceptible to ultraviolet light, if a transparent packaging container is used, there is the risk of degradation of the pharmacologically active ingredient. Patent Document 1 discloses a so-called aluminum blister package that employs a technology whereby an aluminum layer is also formed in the laminate for a blister package on the top side instead of only in a cover on the back side of the blister package. According to this technology, since an aluminum layer is provided in the blister package, although it is no longer possible to visualize the pharmaceutical contained therein, ultraviolet light can be blocked and barrier properties can be further enhanced.

In an aspect that simply combines the aforementioned two technologies, problems such as rupturing of the roof of the dome or the formation of cracks in the skirt or shoulder of the dome occur when a dome-shaped pocket is formed in a laminate for a blister package. In order to overcome these problems, Patent Document 2 dry-laminates an absorbing film with a substrate obtained by laminating a stiff reinforcing layer made of a specific polymer on the absorbing film side of an aluminum layer. In Patent Document 2, overall laminate strength is improved and molding defects are reduced by providing a stiff reinforcing layer.

Patent Document 3 discloses a blister pack obtained by sandwich laminating an absorbing layer and a substrate layer with an adhesive resin layer having a thickness of 20 µm.

The EP 2 612 824 A1 discloses a container including an absorbing layer absorbing at least one of liquid and gas; a reinforcing layer laminated on the absorbing layer with an adhesive layer interposed there between; an aluminum layer laminated on the reinforcing layer with an adhesive layer interposed there between; and a barrier layer laminated on the aluminum layer with an adhesive layer interposed there between and suppressing entry of at least one of liquid and gas. The WO 2013/140821 A1 discloses a layered body for a PTP or blister pack in which an absorption layer is layered on a substrate layer via an adhesive layer. The absorption layer has a configuration in which an outer skin layer, an intermediate layer, and an inner skin layer are layered in the stated sequence, and the outer skin layer is bonded to the substrate layer via the adhesive layer. The outer skin layer is composed of a polyethylene resin, the intermediate layer is composed of a mixture of a polyethylene resin and an absorbent, and the inner skin layer is composed of a blended resin having 25 to 50 mass% of a linear low-density polyethylene, and 75 to 50 mass% of a high-density polyethylene having a higher melting point as a material than the preheating temperature in the molding process. The blended resin of the inner skin layer has 10 to 50 mass% of a linear low-density polyethylene, and 90 to 50 mass% of a high-density polyethylene having a higher melting point as a material than the preheating temperature in the molding process. The JP 2013/169666 A discloses a multilayer film for deep-drawing packaging formed by laminating five or more layers of at least an outer layer, an adhesive layer, a gas barrier layer, an adhesive layer and a heat seal layer in this order. In the multilayer film for deep-drawing packaging, the outer layer is composed of polyethylene blended with 5 to 40 wt.% of thermoplastic elastomer. The JP 2013/079086 A discloses a sealant having at least an oxygen-absorbing resin layer and a food contact layer. When the food contact layers of the sealant are heat-bonded to each other, the sealing strength at 23 °C is 23 to 100 N/15 mm and the sealing strength at 90 °C is 5 to 25 N/15 mm. The WO 2012/029899 A1 discloses a package being provided with a container sheet having formed therein a concave receptacle that accommodates a solid preparation containing a succinic acid solifenacin or a 1-{[(a-iso-butanoyloxy-ethoxy) carbonyl] aminomethyl} -1-cyclohexane acetic acid; and an airtight cover material sheet for encapsulating the solid preparation. The container sheet comprises a package film obtained by layering an adsorption layer, at least one layer of a substrate layer configured from resin, aluminum foil, and a barrier layer. The adsorption layer is layered with the substrate layer, is positioned on the side that accommodates the solid preparation, and contains at least zeolite.

### [Prior Art Documents]

### [Patent Documents]

[Patent Document 1] International Publication No. WO 2006/115264
[Patent Document 2] International Publication No. WO 2012/029323
[Patent Document 3] International Publication No. WO 2013/140821

### DISCLOSURE OF THE INVENTION

### [Problems to be Solved by the Invention]

In the case of attempting to form a relatively deep pocket exceeding 10 mm in diameter and 3.3 mm in depth, there are still many cases in which molding defects occur even when using the laminate described in Patent Document 2 that reduces molding defects, thereby making this inadequate. When the inventors of the present invention conducted a study on the laminates described in Patent Documents 1 and 2 with the aim of reducing molding defects occurring in the case of forming such a deep pocket, it was found that molding defects cause so-called delamination in which the substrate film and absorbing film undergo partial separation.

Namely, in the case of the laminate described in Patent Document 2, it was found that there are cases in which delamination occurs between the absorbing film and the reinforcing layer, and as a result thereof, force is not uniformly transmitted to the molded article when molding a pocket and stress concentrates in a portion thereof resulting in the occurrence of molding defects. When the cause of this delamination was investigated further, it was determined that, even if the absorbing film has a skin layer, fine irregularities are formed on the surface of the absorbing film caused by the presence of inorganic absorbent. Then, it was determined that surface roughness increases, thereby causing a portion of the adhesion between the dry-laminated absorbing film and reinforcing layer to become defective.

In addition, although Patent Document 3 demonstrates some improvement in comparison with the laminates described in Patent Documents 1 and 2, in the case of attempting to mold a deep pocket, a large number of molding defects continue to occur, thereby making this inadequate.

An object of the present invention is to provide a laminate for a blister package that is resistant to the occurrence of molding defects even if a pocket is molded to a certain depth in order to package large contents such as a drug, to a blister package and a blister packaging product that use that laminate, and to a method for producing that laminate.

### [Means for Solving the Problems]

With this in mind, the inventors of the present invention completed the laminate of the present invention, which is capable of preventing delamination between an absorbing film and substrate film and reducing the occurrence of molding defects, by having a comparatively thick resin layer present adjacent to the absorbing film that alleviates surface roughness of the absorbing film.

Namely, the inventors of the present invention found that the aforementioned problems can be solved by the present invention having the aspects indicated below.

### [Aspect 1]

A laminate for a blister package, comprising a substrate film, an adhesive resin layer, and an absorbing film in that order; wherein,
the adhesive resin layer has a thickness of 25 µm to 100 µm, and
the absorbing film comprises an absorbing layer containing a thermoplastic resin and an inorganic absorbent.

### [Aspect 2]

The laminate described in Aspect 1, wherein the adhesive resin layer comprises a polyolefin-based resin.

### [Aspect 3]

The laminate described in Aspect 1 or Aspect 2, wherein the adhesive resin layer is formed through sandwich lamination.

### [Aspect 4]

The laminate described in any of Aspects 1 to 3, wherein the adhesive resin layer has a thickness of 25 µm to 50 µm.

### [Aspect 5]

The laminate described in any of Aspects 1 to 4, wherein the absorbing film comprises an outer skin layer on the side of the adhesive resin layer, the absorbing layer, and an inner skin layer.

### [Aspect 6]

The laminate described in Aspect 5, wherein the outer skin layer, the absorbing film and the inner skin layer of the absorbing film are formed through co-extrusion.

### [Aspect 7]

A laminate for a blister package composed of the following layers:
a substrate layer having a thickness of 12 µm to 25 µm and comprising a resin selected from the group consisting of a polyolefin-based resin, polyvinyl chloride, polyvinylidene chloride, polychlorotrifluoroethylene, polytetrafluoroethylene, saturated or unsaturated polyester, polyamide and polyacrylonitrile;
an aluminum layer having a thickness of 7 µm to 45 µm;
a reinforcing layer having a thickness of 8 µm to 60 µm and comprising a resin selected from the group consisting of polyvinyl chloride, saturated or unsaturated polyester and polyamide;
an adhesive resin layer having a thickness of 25 µm to 50 µm, comprising a polyolefin-based resin, and formed by sandwich lamination;
an outer skin layer having a thickness of 10 µm to 30 µm and comprising a polyolefin-based resin;
an absorbing layer having a thickness of 10 µm to 200 µm and comprising a polyolefin-based resin and 5% by volume to 70% by volume of zeolite; and
an inner skin layer having a thickness of 10 µm to 30 µm and comprising a polyolefin-based resin.

### <Aspect 8>

A blister package comprising the laminate described in any of Aspects 1 to 7 and a cover having a heat seal layer and an aluminum layer, wherein the laminate and the cover are at least partially adhered, and the laminate has a pocket so that contents are able to be contained between the laminate and the cover.

### <Aspect 9>

A blister packaging product having the blister package described in Aspect 8 and having contents contained in the pocket.

### <Aspect 10>

A method for producing a laminate for a blister package, comprising the following:
providing a substrate film;
providing an absorbing film comprising an absorbing layer containing a thermoplastic resin and an inorganic absorbent; and,
forming an adhesive resin layer having a thickness of 25 µm to 100 µm between the absorbing film and the substrate film, on the absorbing film or on the substrate film, to adhere the absorbing film and the substrate film.

### <Aspect 11>

The method for producing a laminate for a blister package described in Aspect 10,
wherein
the substrate film comprises a substrate layer, aluminum layer and reinforcing layer in that order,
the absorbing film comprises an outer skin layer and an inner skin layer that sandwich the absorbing layer, and
the adhesive resin layer is formed between the outer skin layer of the absorbing film and the reinforcing layer of the substrate film, or on the outer skin layer of the absorbing film or on the reinforcing layer of the substrate film.

### [Effects of the Invention]

According to the present invention, a blister package provided with an absorbing layer having a pocket of a certain depth can be produced with minimal occurrence of molding defects. The use of such a blister package makes it possible to store comparatively large contents in a stable state over a long period of time.

The present invention can provide the effect of reducing the occurrence of molding defects by having a comparatively thick adhesive resin layer present between a substrate film and an absorbing film. The effect is unexpected in consideration of the fact that molding defects occurred in the aforementioned Patent Document 2 when a reinforcing layer composed of a soft resin was used between an absorbing film and an aluminum layer (such as in Comparative Example 4 of Patent Document 2), and that moldability typically tends to decrease when the overall thickness of a laminate for a blister package increases.

### BRIEF DESCRIPTION OF THE DRAWINGS

FIG. 1 is a schematic diagram of a blister package provided with an absorbing layer.
FIG. 2 is a schematic diagram of the layer structure of the blister package of the present invention.

### BEST MODE FOR CARRYING OUT THE INVENTION

### <<Laminate for Blister Pack and Production Method Thereof>>

The laminate for a blister pack of the present invention has a substrate film, an absorbing film, and an adhesive resin layer that adheres the two. The substrate film at least has a substrate layer and preferably further has an aluminum layer and a reinforcing layer on the side of the absorbing film in that order. In addition, the absorbing film has an absorbing layer comprising a thermoplastic resin and an inorganic absorbent, and further has an inner skin layer and an outer skin layer. The laminate for a blister pack of the present invention preferably comprises or is composed of an outermost substrate layer, an aluminum layer, a reinforcing layer, an adhesive resin layer, an outer skin layer, an absorbing layer and an inner skin layer that contacts a cover, in that order.

The thickness of the laminate of the present invention can be, for example, 500 µm or less, 400 µm or less, 300 µm or less, 250 µm or less, 200 µm or less, 150 µm or less, 100 µm or less, 90 µm or less, 85 µm or less or 80 µm or less, and 50 µm or more, 60 µm or more or 70 µm or more in consideration of strength and stiffness of the laminate, and ease of pushing through the blisters and barrier properties when molded into a blister packaging product.

Furthermore, in the present description, although a "laminate composed of a layer A and a layer B" refers to a laminate substantially only comprising the layer A and the layer B, it also means that it may also comprise other layers in addition to the layer A and the layer B within a range that allows the advantageous effects of the present invention to be obtained or a range over which the advantageous effects are not lost. For example, the laminate may be expressed as a "laminate composed of a layer A and a layer B" even if an anchor coat layer and the like is formed between the layer A and the layer B.

### <Substrate Film>

The substrate film isolates the absorbing film from the external environment and imparts suitable stiffness, strength and the like to the entire laminate. The substrate film comprises a substrate layer and may further comprise an aluminum layer and a reinforcing layer in that order. In this case, the substrate layer may be the outermost layer of the laminate for a blister pack.

The thickness of the substrate film can be, for example, 150 µm or less or 100 µm or less and 20 µm or more, 30 µm or more or 50 µm or more in consideration of maintaining barrier properties and imparting strength and the like to the entire laminate of the present invention.

The substrate layer comprises a thermoplastic resin, and examples of that thermoplastic resin include a polyolefin-based resin, polyvinyl chloride, polyvinylidene chloride (PVDC), polychlorotrifluoroethylene, polytetrafluoroethylene, saturated or unsaturated polyester (such as polyethylene terephthalate (PET) or polybutylene terephthalate), polyamide (such as Nylon, Nylon 6 or Nylon MXD6) and polyacrylonitrile (PAN), and these films can be used for the substrate layer as a single layer or a combination of a plurality of layers.

Examples of polyolefin-based resins include low-density polyethylene (LDPE), linear low-density polyethylene (LLDPE), medium-density polyethylene (MDPE), high-density polyethylene (HDPE), polyethylene polymerized using a metallocene catalyst, propylene homopolymer, propylene-ethylene block copolymer, propylene-ethylene random copolymer, polypropylene polymerized using a metallocene catalyst, chlorinated polypropylene, polymethylpentene, ethylene-acrylic acid copolymer (EAA), ethylene-methacrylic acid copolymer (EMAA), ethylene-ethyl acrylate copolymer (EEA), ethylene-methyl acrylate copolymer (EMA), ethylene-ethyl acrylate copolymer, ethylene-vinyl acetate copolymer (EVA), ionomer, carboxylic acid-modified polyethylene, carboxylic acid-modified polypropylene, and carboxylic acid-modified polyethylene-vinyl acetate copolymer.

The thickness of the substrate layer can be, for example, 8 µm or more, 10 µm or more or 12 µm or more, and 50 µm or less or 25 µm or less.

The aluminum layer may be a layer comprising pure aluminum (Al) foil or an aluminum alloy foil. Other examples of the aluminum layer include resin layers having an aluminum vapor-deposited film, and examples of resin films in which these vapor-deposited layers are deposited include polyolefin-based resins (and particularly, oriented or cast polypropylene), polyvinyl chloride, saturated polyester (such as polyethylene terephthalate (PET) or polybutylene terephthalate) and polyamide (such as Nylon, Nylon 6 or Nylon MXD6).

The thickness of the aluminum layer can be, for example, 7 µm or more, 10 µm or more or 12 µm or more, and 50 µm or less, 45 µm or less or 30 µm or less.

A resin layer capable of being used as a substrate layer can also be used for the reinforcing layer. The reinforcing layer preferably comprises polyamide, saturated or unsaturated polyester (such as polyethylene terephthalate (PET) or polybutylene terephthalate) and polyvinyl chloride in order to impart suitable stiffness. The reinforcing layer is particularly preferably the reinforcing layer disclosed in Patent Document 2.

The thickness of the reinforcing layer can be, for example, 8 µm or more, 10 µm or more or 12 µm or more, and 80 µm or less, 60 µm or less, 50 µm or less or 25 µm or less.

A known lamination method such as dry lamination or extrusion lamination can be used for the method used to laminate each layer of the substrate film.

### <Adhesive Resin Layer>

The adhesive resin layer has a thickness of 25 µm to 100 µm and adheres the substrate film and the absorbing film.

Although there are no particular limitations on the adhesive resin layer provided it is a layer that is capable of alleviating surface irregularities of the absorbing film, the thickness thereof can be 25 µm or more, 26 µm or more, 30 µm or more, 35 µm or more or 40 µm or more, and 100 µm or less, 80 µm or less, 60 µm or less or 50 µm or less in order to demonstrate the advantageous effects thereof. In the case of a thickness of 50 µm or less, it becomes easy to form the adhesive resin layer between the substrate film and the absorbing film by sandwich lamination, thereby making this preferable. Since the thickness of an adhesive resin layer formed by sandwich lamination is normally about 10 µm to 15 µm, the adhesive resin layer used in the present invention can be said to be comparatively thick.

The adhesive resin layer can contain, for example, a polyolefin-based resin, and the polyolefin-based resin is particularly preferably low-density polyethylene (LDPE).

The adhesive resin layer may be formed by extruding a molten resin to serve as the adhesive resin layer between the absorbing film and the substrate film followed by subjecting to sandwich lamination to adhere the molten resin there between.

### <Absorbing film>

The absorbing film comprises an absorbing layer containing an inorganic absorbent and a thermoplastic resin. The absorbing film preferably comprises a skin layer containing a thermoplastic resin on at least one side of the absorbing layer for the purpose of adjusting absorption rate and surface roughness of the absorbing layer. More preferably, the absorbing film has an outer skin layer located on the side of the substrate film, an absorbing layer and an inner skin layer in that order. In this case, the inner skin layer preferably has heat sealability with the cover. Namely, the inner skin layer may compose the outermost layer of the laminate for a blister pack on the opposite side from the substrate film or substrate layer.

The absorbing layer, outer skin layer and inner skin layer comprise thermoplastic resins, and examples of these resins include polyolefin-based resins, saturated or unsaturated polyester, polyvinyl chloride (PVC), polystyrene, polycarbonate, polyamide and mixtures thereof, with polyolefin-based resins being preferable.

Since the organic layer contains an inorganic absorbent, it is able to absorb at least one of a liquid and gas. Examples of absorption targets particularly include water and organic and inorganic gases such as carbon dioxide, ammonia, hydrogen sulfide, oxygen, chlorine and hydrogen chloride. The inorganic absorbent may be contained in the outer skin layer and/or inner skin layer.

Examples of inorganic absorbents include chemical absorbents such as calcium oxide, calcium chloride, calcium sulfate, magnesium sulfate, sodium sulfate, calcium carbonate, magnesium oxide, barium oxide, diphosphorus pentoxide, magnesium perchlorate, potassium permanganate, sodium permanganate or sodium thiosulfate, and physical absorbents such as alumina, aluminum oxide, magnesium silicate, quicklime, silica gel or inorganic molecular sieves. There are no particular limitations on the inorganic molecular sieves, and examples thereof include aluminosilicate minerals, clay, porous glass, microporous activated carbon, zeolite, activated carbon and compounds having an opening structure that allows diffusion of water and other small molecules, and these compounds can be used alone or by combining a plurality thereof.

In addition, other examples of inorganic absorbents may be oxygen scavengers including iron-based oxygen absorbents such as iron powder (such as reduced iron powder, atomized ion powder or activated iron powder), ferrous oxide and ferrous salt; metal halides (such as sodium chloride, sodium bromide, sodium iodide, potassium chloride, potassium bromide, potassium iodide, calcium chloride, magnesium chloride and barium chloride); oxygen-deficient cerium oxide; sulfites; bisulfites; and dithionite salts.

Among these, zeolite is preferable for the inorganic absorbent. Examples of zeolite that can be used include natural zeolite, artificial zeolite and synthetic zeolite. Zeolite is a porous, granular substance used to separate substances according to differences in molecular size, has a structure consisting of uniform pores, and since it has the action of a type of sieve by absorbing small molecules that enter the cavities of those pores, is capable of absorbing water (including steam and water vapor) and organic gases. An example of synthetic zeolite is a molecular sieve (UNION SHOWA K.K.), and among these, molecular sieves having a pore diameter (absorption opening) of 0.3 nm to 1 nm in particular can be used. For examples, molecular sieves having a pore diameter of 0.3 nm, 0.4 nm, 0.5 nm or 1 nm cam be respectively used as molecular sieve 3A, molecular sieve 4A, molecular sieve 5A and molecular sieve 13X.

Although there are no particular limitations on the average particle diameter (particle diameter having an integrated value of 50% in a particle size distribution determined by laser diffraction scattering) of the inorganic absorbent, the volume-based median diameter (d50), for example, may be 100 nm or more, 500 nm or more, 1 µm or more or 5 µm or more, and 100 µm or less, 50 µm or less, 30 µm or less or 15 µm or less. In the present invention, different types of the aforementioned inorganic absorbent can be used as is appropriate according to such factors as the properties of the absorbed substance and contents, surface roughness of the absorbing film or target absorption rate.

From the viewpoint of absorption capacity, the inorganic absorbent can be contained in the absorbing layer within the range of 5% by weight or more, 10% by weight or more, 20% by weight or more, 30% by weight or more, 40% by weight or more or 50% by weight or more based on the weight of the absorbing layer, and from the viewpoint of dispersibility in the thermoplastic resin and moldability, can be contained in the absorbing layer within the range of 90% by weight or less, 80% by weight or less, 70% by weight or less or 60% by weight or less.

In addition, the inorganic absorbent can be contained at 5% by volume or more, 10% by volume or more, 20% by volume or more or 30% by volume or more and 70% by volume or less, 65% by volume or less, 60% by volume or less, 55% by volume or less or 50% by volume or less.

Furthermore, in the case of calculating the volume percentage of inorganic absorbent contained in a layer and the specific gravity of the inorganic absorbent is uncertain, after having first determined the specific gravity of that layer by measuring, the volume percentage of the inorganic absorbent may then be determined from the weights at which the inorganic absorbent and thermoplastic resin have been added and the specific gravity of the thermoplastic resin. For example, in the case of a layer having specific gravity of 1.1 g/cm³ that has been formed using 50 g of inorganic absorbent and 50 g of thermoplastic resin having specific gravity of 0.9 g/cm³, the inorganic absorbent contained in that layer can be calculated to have a specific gravity of 1.41 g/cm³ and can be said to be present in that layer at 38.9% by volume.

Although the inorganic absorbent may be contained in the inner skin layer and/or outer skin layer, the content of inorganic absorbent in the outer skin layer in consideration of such factors as the formability of these layers or ease of lamination with other layers is preferably 10% by volume or less, 7% by volume or less or 5% by volume or less, while the content of inorganic absorbent in the inner skin layer is preferably 40% by weight or less, 30% by volume or less, 28.8% by volume or less, 20% by volume or less, 10% by volume or less, 7% by volume or less or 5% by volume or less.

The thickness of the absorbing film is, for example, 300 µm or less, 200 µm or less, 150 µm or less or 130 µm or less, and 30 µm or more, 40 µm or more or 50 µm or more. A thickness of 150 µm or less is particularly preferable since ease of pushing through the blisters is favorable.

The thickness of the absorbing layer is, for example, 200 µm or less, 150 µm or less or 100 µm or less, and 20 µm or more, 30 µm or more or 40 µm or more.

The thickness of the inner skin layer and outer skin layer is, for example, 30 µm or less, 20 µm or less or 15 µm or less, and 5 µm or more, 8 µm or more or 10 µm or more.

An absorbing film having a single absorbing layer can be formed by forming with the inorganic absorbent and thermoplastic resin by inflation molding, T-die molding, calendering, casting, press molding, extrusion molding or injection molding.

An absorbing film comprising an outer skin layer, absorbing layer and inner skin layer can be produced by multilayer inflation process. This method consists of simultaneously extruding a plurality of resins into the shape of a tube with a plurality of extruding machines and inflating the tubes by blowing air inside to produce a multilayer film. An absorbing film can be obtained by co-extruding and molding the absorbing layer and skin layers in this manner.

Prior to producing the absorbing film by inflation process, a resin composition (pellets) for the absorption layer is preferably prepared by processing the thermoplastic resin and inorganic absorbent into pellets after heating and kneading with a twin screw kneader. Moreover, the content of the inorganic absorbent may be adjusted by diluting by dry blending the aforementioned pellets with pellets of the thermoplastic resin. The absorbing film is then produced by carrying out multilayer film deposition by multilayer inflation process using pellets for the absorbing layer and pellets of the thermoplastic resin for the skin layers. After having produced the absorbing layer by inflation process, the separately produced skin layers may be laminated, for example by thermocompression bonding and the like, to obtain the absorbing film.

In the case of producing an absorbing film having a single absorbing layer by T-die process, a film can be formed by first preparing pellets containing the inorganic absorbent and thermoplastic resin in advance. At this time, an absorbing film containing an absorbing layer and skin layers may be obtained by co-extruding the skin layers on one or both sides of the absorbing layer.

The absorbing layer and skin layers are respectively formed into the shape of a film or sheet by inflation process, T-die process, calendering, casting, pressing, extrusion processor injection process followed by laminating the layers using a known method to obtain an absorbing film.

In the case of forming the absorbing layer and skin layers by co-extruding by multilayer T-die process or multilayer inflation process, surface roughness attributable to the absorbing layer in particular is easily reflected in the surface of the absorbing film since the skin layers are adhered to the absorbing layer in a molten state. Thus, the present invention is particularly advantageous in the case of using an absorbing film formed by co-extrusion since the present invention alleviates surface roughness of the absorbing film by providing an adhesive resin layer.

### <Other>

In addition to the aforementioned layers, the laminate for a blister package of the present invention may also further have a printing layer, an anchor coat layer for enhancing adhesion between two layers or a primer layer and the like between any two arbitrary layers.

### <<Blister package and Blister packaging product>>

The blister package of the present invention has the aforementioned laminate for a blister package and a cover. The laminate for a blister package and the cover are at least partially adhered. After having molded a pocket for containing contents such as tablets in the laminate for a blister package, the contents can be contained in the pocket followed by adhering the cover to produce a blister packaging product in which the contents are contained in the pocket of the blister package.

### <Contents>

There are no particular limitations on the contents of the blister package of the present invention provided it is a substance that can be deteriorated by contact with the outside air, and examples thereof include drugs, foods, cosmetics, medical devices and electronic components. In addition, examples of contents include detergents and agricultural chemicals in addition to prescription drugs.

### <Cover>

The cover comprises a heat seal layer and an aluminum layer. A thermoplastic resin able to be used for the aforementioned skin layers can also be used for the heat seal layer, and polypropylene can be used preferably. Corresponding resins can be suitably selected for the heat seal layer of the cover and layer of the laminate for a blister package that contacts the cover from the viewpoint of enhancing adhesion.

An aluminum layer similar to the aluminum layer previously described with respect to the substrate film can be used for the aluminum layer of the cover. The cover is preferably of a form in which a heat seal layer in the form of polypropylene is coated onto aluminum foil.

The cover can also be of a form in which an easy peeling resin such as a polyolefin-based polymer alloy is coated onto aluminum foil, or a form in which an easy peeling film is laminated thereon. In this case, contents can be removed easily since the blister package and cover are made to separate at the adhesive interface.

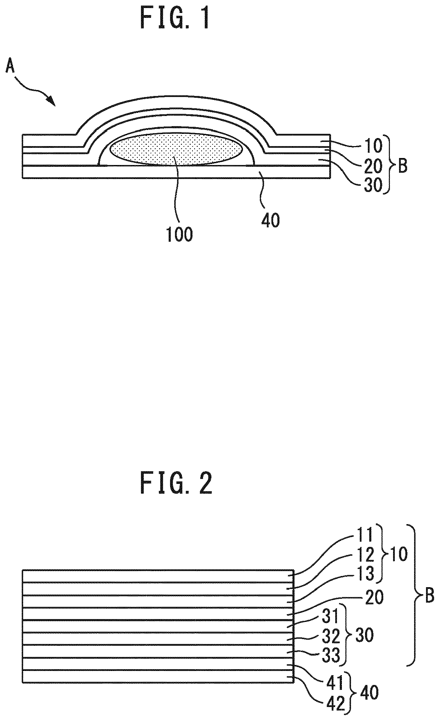

FIG. 1 is a schematic view of a blister packaging product A. Here, a cover 40 is adhered to a laminate for a blister package B obtained by laminating an adhesive resin layer 20 and an absorbing film 30 onto a substrate film 10 in that order, and contents 100 are enclosed in a dome-shaped pocket of the laminate B.

FIG. 2 is a schematic view of the layer structure of the blister packaging product A of the present invention. This drawing shows an end of the blister packaging product A where the pocket is not formed, and the cover 40 is adhered to the laminate for a blister package B obtained by laminating the substrate film 10, comprising a substrate layer 11, an aluminum layer 12 and a reinforcing layer 13, the adhesive resin layer 20 and the absorbing film 30 in that order. The absorbing film 30 is composed of an outer skin layer 31, a second absorbing layer 32 and an inner skin layer 33, and the cover 40 is composed of a heat seal layer 41 and an aluminum layer 42.

### [Examples]

### <<Production of Laminate for Blister package>>

### <Production of Substrate Film>

A reinforcing layer in the form of polyethylene terephthalate having a thickness of 12 µm (Lumirror 12S10, TORAY INDUSTRIES INC.) was laminated onto a laminate composed of a substrate layer in the form of a Nylon (Ny) film having a thickness of 25 µm and an aluminum layer in the form of aluminum (Al) foil having a thickness of 40 µm (AL/AL Substrate, UACJ FOIL CORP.) using a dry laminator (INVEX Pilot Coater, TECHNO SMART CORP.) to obtain a substrate film. Here, a polyurethane-based adhesive comprising a main agent (Takelac® XA1151, MITSUI CHEMICALS, INC.) and a curing agent (Takenate® A12, MITSUI CHEMICALS, INC.) was used for the adhesive for dry lamination, and an adhesive layer having a thickness of 5 µm was formed at a feeding speed of 10 m/min.

### <Production of Absorbing film>

Inorganic absorbent in the form of zeolite (Molecular Sieve 4A, UNION SHOWA K.K.) and pellets of a thermoplastic resin in the form of LDPE (Petrocene 202, TORAY INDUSTRIES INC.) were kneaded and pelletized using a twin screw extruder (PCM70, IKEGAI CORP.) to obtain pellets containing 47% by weight of zeolite content for the absorbing layer.

Pellets of LLDPE (Evolue SP2520, PRIME POLYMER CO., LTD.) were prepared for use as the resin for the inner skin layer and outer skin layer, and these pellets were subjected to co-extrusion process with the aforementioned pellets for the absorbing layer by air-cooled inflation process at a temperature of 170°C and feeding speed of 10 m/min to obtain an absorbing film. Here, a three-layer inflation machine (TUL-600R, PLACO CO., LTD.) was used. In addition, the thickness of the absorption layer was made to be 90 µm and the thicknesses of the inner skin layer and outer skin layer were made to be 20 µm.

### <Adhesion of Substrate Film and Absorbing film by Adhesive Resin Layer>

### * Laminate of Comparative Example 1

The reinforcing layer of the substrate film and the outer skin layer of the absorbing film were adhered by dry lamination. Here, an adhesive layer having a thickness of 5 µm was formed using a dry laminator (INVEX Pilot Coater, TECHNO SMART CORP.) and a polyurethane-based adhesive comprising a main agent (Takelac® XA1151, MITSUI CHEMICALS, INC.) and a curing agent (Takenate® A12, MITSUI CHEMICALS, INC.) were used at a feeding speed of 10 m/min to obtain the laminate of Comparative Example 1.

### * Laminates of Comparative Examples 2 and 3 and Examples 1 to 3

Laminates of Comparative Examples 2 and 3 and Examples 1 to 3 were obtained by bonding the reinforcing layer of the substrate film and the outer skin layer of the absorbing film by sandwich lamination while changing the thickness of the adhesive resin layer. Here, LDPE for adhesive resin (Suntec-LD L1850K, ASAHI KASEI CHEMICALS CORP.) was melted at 300°C and extruded using a sandwich laminator (TP45.45 P46010, PLACO CO., LTD.) to obtain laminates at a feeding speed of 30 m/min to 45 m/min. Furthermore, prior to adhering the respective layers, an anchor coating agent (main agent: Takelac® XA1151, MITSUI CHEMICALS, INC., curing agent: Takenate® A12, MITSUI CHEMICALS, INC.) was coated onto the reinforcing layer of the substrate film at a thickness of 1 µm.

### <<Evaluation>>

A pocket for containing contents was formed in the laminates obtained in this manner with a blister molding machine to evaluate the incidence of molding defects.

More specifically, pockets having a depth of 5.75 mm were molded in the aforementioned laminates at room temperature. A high-speed hydraulic press (HYP505H) manufactured by JAPAN AUTOMATIC MACHINE CO., LTD. was used for the molding machine. The plug material consisted of ultra-high molecular weight polyethylene resin having a viscosity average molecular weight of 5.5 million (New Light®, SAXIN CORP.), the plug diameter was made to be 13 mm, and the molding speed was made to be 200 mm/s. This test was repeated ten times, and those laminates in which cracks, scratches or other visual defects did not occur in the molded pocket to a degree that could be determined with the naked eye were evaluated as acceptable and the number of acceptable laminates was investigated.

The results are shown in the table below.

**[Table 1]**

| | Thickness of Adhesive Resin Layer | No. of Acceptable Laminates | Percentage of Acceptable Laminates |
|---|---|---|---|
| Comp. Example 1 | 5 µm | 2/10 | 20% |
| Comp. Example 2 | 15 µm | 4/10 | 40% |
| Comp. Example 3 | 20 µm | 5/10 | 50% |
| Example 1 | 25 µm | 8/10 | 80% |
| Example 2 | 30 µm | 8/10 | 80% |
| Example 3 | 40 µm | 10/10 | 100% |

As is clear from these results, it was determined that the incidence of molding defects decreases as the thickness of the adhesive resin layer increases, and if an adhesive resin layer is formed at a thickness of 40 µm, molding defects no longer occur even if the pocket is molded at a depth of 5.75 mm.

### INDUSTRIAL APPLICABILITY

A laminate for a blister package that uses the absorbing layer of the present invention allows the molding of a deep pocket therein, and a blister package using that laminate makes it possible to store comparatively large contents in a stable state (by inhibiting deterioration) over a long period of time.

### BRIEF DESCRIPTION OF THE REFERENCE SYMBOLS

- 10: Substrate film
- 11: Substrate layer
- 12: Aluminum layer
- 13: Reinforcing layer
- 20: Adhesive resin layer
- 30: Absorbing film
- 31: Outer skin layer
- 32: Absorbing layer
- 33: Inner skin layer
- 40: Cover
- 41: Heat seal layer
- 42: Aluminum layer
- 100: Contents
- A: Blister packaging product
- B: Laminate for blister package

## Claims

1. A laminate (B) for a blister package, comprising a substrate film (10), an adhesive resin layer (20), and an absorbing film (30) in that order; wherein,
the adhesive resin layer (20) has a thickness of 25 µm to 100 µm, and
the absorbing film (30) comprises an absorbing layer (32) containing a thermoplastic resin and an inorganic absorbent.

2. The laminate (B) according to claim 1, wherein the adhesive resin layer (20) comprises a polyolefin-based resin.

3. The laminate (B) according to claim 1 or 2, wherein the adhesive resin layer (20) is formed through sandwich lamination.

4. The laminate (B) according to any one of claims 1 to 3, wherein the adhesive resin layer (20) has a thickness of 25 µm to 50 µm.

5. The laminate (B) according to any one of claims 1 to 4, wherein the absorbing film (30) comprises an outer skin layer (31) on the side of the adhesive resin layer (20), the absorbing layer (32), and an inner skin layer (33).

6. The laminate (B) according to claim 5, wherein the outer skin layer (31), the absorbing film (30) and the inner skin layer (33) of the absorbing film (30) are formed through co-extrusion.

7. The laminate (B) for a blister package according to claim 1, composed of the following layers:
a substrate layer (11) having a thickness of 12 µm to 25 µm and comprising a resin selected from the group consisting of a polyolefin-based resin, polyvinyl chloride, polyvinylidene chloride, polychlorotrifluoroethylene, polytetrafluoroethylene, saturated or unsaturated polyester, polyamide and polyacrylonitrile;
an aluminum layer (42) having a thickness of 7 µm to 45 µm;
a reinforcing layer (13) having a thickness of 8 µm to 60 µm and comprising a resin selected from the group consisting of polyvinyl chloride, saturated or unsaturated polyester and polyamide;
an adhesive resin layer (20) having a thickness of 25 µm to 50 µm, comprising a polyolefin-based resin, and formed by sandwich lamination;
an outer skin layer (31) having a thickness of 10 µm to 30 µm and comprising a polyolefin-based resin;
an absorbing layer (32) having a thickness of 10 µm to 200 µm and comprising a polyolefin-based resin and 5 % by volume to 70 % by volume of zeolite; and
an inner skin layer (33) having a thickness of 10 µm to 30 µm and comprising a polyolefin-based resin.

8. A blister package comprising the laminate (B) according to any one of claims 1 to 7 and a cover (40) having a heat seal layer (41) and an aluminum layer (42), wherein the laminate (B) and the cover (40) are at least partially adhered, and the laminate (B) has a pocket so that contents (100) are able to be contained between the laminate (B) and the cover (40).

9. A blister packaging product (A) having the blister package according to claim 8 and having contents (100) contained in the pocket.

10. A method for producing a laminate (B) for a blister package, comprising the following:
providing a substrate film (10);
providing an absorbing film (30) comprising an absorbing layer (32) containing a thermoplastic resin and an inorganic absorbent; and,
forming an adhesive resin layer (20) having a thickness of 25 µm to 100 µm between the absorbing film (30) and the substrate film (10), on the absorbing film (30) or on the substrate film (10), to adhere the absorbing film and the substrate film (10).

11. The method for producing a laminate (B) for a blister package according to claim 10,
wherein
the substrate film (10) comprises a substrate layer (11), aluminum layer (42) and reinforcing layer (13) in that order,
the absorbing film (30) comprises an outer skin layer (31) and an inner skin layer (33) that sandwich the absorbing layer (32), and
the adhesive resin layer (20) is formed between the outer skin layer (31) of the absorbing film (30) and the reinforcing layer (13) of the substrate film (10), or on the outer skin layer (31) of the absorbing film (30) or on the reinforcing layer (13) of the substrate film (10).

## Patentansprüche

1. Laminat (B) für eine Blisterpackung, die einen Substratfilm (10), eine klebende Harzschicht (20) und einen absorbierenden Film (30) in dieser Reihenfolge aufweist, wobei,
die klebende Harzschicht (20) eine Dicke von 25 µm bis 100 µm aufweist und
der absorbierende Film (30) eine absorbierende Schicht (32) aufweist, die ein thermoplastisches Harz und ein anorganisches Absorptionsmittel enthält.

2. Laminat (B) nach Anspruch 1, wobei die klebende Harzschicht (20) ein auf Polyvinylchlorid basierendes Harz aufweist.

3. Laminat (B) nach Anspruch 1 oder 2, wobei die klebende Harzschicht (20) durch eine Sandwichlaminierung gebildet worden ist.

4. Laminat (B) nach einem der Ansprüche 1 bis 3, wobei die klebende Harzschicht (20) eine Dicke von 25 µm bis 50 µm aufweist.

5. Laminat (B) nach einem der Ansprüche 1 bis 4, wobei der absorbierende Film (30) eine äußere Hautschicht (31) auf der Seite der klebenden Harzschicht (20), die absorbierende Schicht (32) und eine innere Hautschicht (33) aufweist.

6. Laminat (B) nach Anspruch 5, wobei die äußere Hautschicht (31), die absorbierende Schicht (30) und die innere Hautschicht (33) der absorbierenden Schicht (30) durch eine Coextrusion gebildet worden sind.

7. Laminat (B) für eine Blisterverpackung nach einem der vorhergehenden Ansprüche, die aus folgenden Schichten gebildet worden ist:
eine Substratschicht (11), die eine Dicke von 12 µm bis 25 µm und die ein Harz aufweist, das aus der Gruppe ausgewählt worden ist, die ein auf Polyvinylchlorid basierendes Harz, ein Polyvinylchlorid, ein Polyvinylidenchlorid, ein Polychlortrifluorethylen, ein Polytetrafluorethylen, ein gesättigtes oder ungesättigtes Polyester, ein Polyamid und ein Polyacrylnitril umfasst,
eine Aluminiumschicht (42), die eine Dicke von 7 µm bis 45 µm aufweist,
eine verstärkende Schicht (13), die eine Dicke von 8 µm bis 60 µm und die ein Harz aufweist, das aus der Gruppe ausgewählt worden ist, die ein Polyvinylchlorid, ein gesättigtes oder ungesättigtes Polyester und ein Polyamid umfasst,
eine klebende Harzschicht (20), die eine Dicke von 25 µm bis 50 µm und ein auf Polyolefin basierendes Harz aufweist und die durch eine Sandwichlaminierung gebildet worden ist,
eine äußere Hautschicht (31), die eine Dicke von 10 µm bis 30 µm und ein auf Polyolefin basierendes Harz aufweist,
eine absorbierende Schicht (32), die eine Dicke von 10 µm bis 200 µm und die ein auf Polyolefin basierendes Harz und 5 Volumenprozent bis 70 Volumenprozent Zeolith aufweist, und
eine innere Hautschicht (33), die eine Dicke von 10 µm bis 30 µm und ein auf Polyolefin basierendes Harz aufweist.

8. Blisterpackung, die das Laminat (B) nach einem der Ansprüche 1 bis 7 und eine Abdeckung (40) mit einer Heißsiegelschicht (41) und einer Aluminiumschicht (42) aufweist, wobei das Laminat (B) und die Abdeckung (40) zumindest teilweise verklebt sind, und das Laminat (B) eine Tasche so aufweist, dass ein Inhalt (100) zwischen dem Laminat (B) und der Abdeckung (40) enthalten sein kann.

9. Blisterverpackungsprodukt (A), das die Blisterverpackung nach Anspruch 8 und einen Inhalt (100) aufweist, der in der Tasche enthalten ist.

10. Verfahren zur Herstellung eines Laminats (B) für eine Blisterpackung, welches das Folgende umfasst:
ein Bereitstellen eines Substratfilms (10),
ein Bereitstellen eines absorbierenden Films (30), das eine absorbierende Schicht (32) aufweist, die ein thermoplastisches Harz und ein anorganisches Absorptionsmittel enthält, und,
ein Ausbilden einer klebenden Harzschicht (20), die eine Dicke von 25 µm bis 100 µm zwischen dem absorbierenden Film (30) und dem Substratfilm (10) aufweist, auf dem absorbierenden Film (30) oder auf dem Substratfilm (10), um den absorbierenden Film und den Substratfilm (10) anzuhaften.

11. Verfahren zur Herstellung eines Laminats (B) für eine Blisterpackung nach Anspruch 10, wobei
der Substratfilm (10) eine Substratschicht (11), eine Aluminiumschicht (42) und eine verstärkende Schicht (13) in dieser Reihenfolge aufweist,
der absorbierende Film (30) eine äußere Hautschicht (31) und eine innere Hautschicht (33) aufweist, die die absorbierende Schicht (32) zwischen sich aufnehmen, und
die klebende Harzschicht (20) zwischen der äußeren Hautschicht (31) des absorbierenden Films (30) und der verstärkenden Schicht (13) des Substratfilms (10) oder auf der äußeren Hautschicht (31) des absorbierende Films (30) oder auf der verstärkenden Schicht (13) der Substratfilms (10) gebildet worden ist.

## Revendications

1. Stratifié (B) pour une plaquette thermoformée, comprenant un film de substrat (10), une couche de résine adhésive (20), et un film absorbant (30) dans cet ordre ; dans lequel,
la couche de résine adhésive (20) a une épaisseur de 25 µm à 100 µm, et
le film absorbant (30) comprend une couche absorbante (32) contenant une résine thermoplastique et un absorbant inorganique.

2. Stratifié (B) selon la revendication 1, dans lequel la couche de résine adhésive (20) comprend une résine à base de polyoléfine.

3. Stratifié (B) selon la revendication 1 ou 2, dans lequel la couche de résine adhésive (20) est formée par stratification sandwich.

4. Stratifié (B) selon l'une quelconque des revendications 1 à 3, dans lequel la couche de résine adhésive (20) a une épaisseur de 25 µm à 50 µm.

5. Stratifié (B) selon l'une quelconque des revendications 1 à 4, dans lequel le film absorbant (30) comprend une couche d'enveloppe externe (31) du côté de la couche de résine adhésive (20), la couche absorbante (32), et une couche d'enveloppe interne (33).

6. Stratifié (B) selon la revendication 5, dans lequel la couche d'enveloppe externe (31), le film absorbant (30) et la couche d'enveloppe interne (33) du film absorbant (30) sont formés par co-extrusion.

7. Stratifié (B) pour une plaquette thermoformée selon la revendication 1, composé des couches suivantes :
une couche de substrat (11) ayant une épaisseur de 12 µm à 25 µm et comprenant une résine choisie dans le groupe constitué d'une résine à base de polyoléfine, de chlorure de polyvinyle, de chlorure de polyvinylidène, de polychlorotrifluoroéthylène, de polytétrafluoroéthylène, de polyester saturé ou insaturé, de polyamide et de polyacrylonitrile ;
une couche d'aluminium (42) ayant une épaisseur de 7 µm à 45 µm ;
une couche de renforcement (13) ayant une épaisseur de 8 µm à 60 µm et comprenant une résine choisie dans le groupe constitué de chlorure de polyvinyle, de polyester saturé ou insaturé et de polyamide ;
une couche de résine adhésive (20) ayant une épaisseur de 25 µm à 50 µm, comprenant une résine à base de polyoléfine, et formée par stratification sandwich ;
une couche d'enveloppe externe (31) ayant une épaisseur de 10 µm à 30 µm et comprenant une résine à base de polyoléfine ;
une couche absorbante (32) ayant une épaisseur de 10 µm à 200 µm et comprenant une résine à base de polyoléfine et 5 % en volume à 70 % en volume de zéolite ; et
une couche d'enveloppe interne (33) ayant une épaisseur de 10 µm à 30 µm et comprenant une résine à base de polyoléfine.

8. Plaquette thermoformée comprenant le stratifié (B) selon l'une quelconque des revendications 1 à 7 et un revêtement (40) ayant une couche thermoscellable (41) et une couche d'aluminium (42), dans laquelle le stratifié (B) et le revêtement (40) sont au moins partiellement collés, et le stratifié (B) comporte une poche de telle sorte que le contenu (100) peut être contenu entre le stratifié (B) et le revêtement (40).

9. Produit de plaquette thermoformée (A) ayant la plaquette thermoformée selon la revendication 8 et ayant le contenu (100) contenu dans la poche.

10. Procédé de production d'un stratifié (B) pour une plaquette thermoformée, comprenant les étapes suivantes :
fourniture d'un film de substrat (10) ;
fourniture d'un film absorbant (30) comprenant une couche absorbante (32) contenant une résine thermoplastique et un absorbant inorganique ; et,
formation d'une couche de résine adhésive (20) ayant une épaisseur de 25 µm à 100 µm entre le film absorbant (30) et le film de substrat (10), sur le film absorbant (30) ou sur le film de substrat (10), pour coller le film absorbant et le film de substrat (10).

11. Procédé de production d'un stratifié (B) pour une plaquette thermoformée selon la revendication 10,
dans lequel
le film de substrat (10) comprend une couche de substrat (11), une couche d'aluminium (42) et une couche de renforcement (13) dans cet ordre,
le film absorbant (30) comprend une couche d'enveloppe externe (31) et une couche d'enveloppe interne (33) qui prennent en sandwich la couche absorbante (32), et
la couche de résine adhésive (20) est formée entre la couche d'enveloppe externe (31) du film absorbant (30) et la couche de renforcement (13) du film de substrat (10), ou sur la couche d'enveloppe externe (31) du film absorbant (30) ou sur la couche de renforcement (13) du film de substrat (10).
